# EUROPÄISCHE PATENTSCHRIFT

(11) **EP 1 196 308 B1**
(45) Veröffentlichungstag und Bekanntmachung des Hinweises auf die Patenterteilung: **05.03.2003**
(21) Anmeldenummer: 00956207.5
(22) Anmeldetag: 18.07.2000
(51) Int. Cl.: B60R 1/072

(54) **ANTRIEBSVORRICHTUNG FÜR EINEN VERSTELLBAREN KRAFTFAHRZEUGSPIEGEL UNTER VERWENDUNG EINES SELBSTKALIBRIERENDEN POTENTIOMETERS**
DRIVE DEVICE FOR A VEHICLE ADJUSTABLE REAR-VIEW MIRROR USING A SELF-CALIBRATION POTENTIOMETER
DISPOSITIF D'ENTRAINEMENT POUR UN RETROVISEUR REGLABLE DE VEHICULE AUTOMOBILE, FAISANT APPEL A UN POTENTIOMETRE A AUTO-ETALONNAGE

(30) Priorität: 21.07.1999 DE 19934905
(43) Veröffentlichungstag der Anmeldung: 17.04.2002
(73) Patentinhaber: Magna Auteca AG, 8160 Weiz (AT)
(72) Erfinder: SCHILLEGGER, Peter, A-8302 Nestelbach (AT)
(74) Vertreter: Pfenning, Meinig & Partner GbR
(86) Internationale Anmeldenummer: EP0006880
(87) Internationale Veröffentlichungsnummer: WO01007291

(56) Entgegenhaltungen:
- EP-A- 0 528 418
- EP-A- 0 684 452
- EP-A- 0 793 078
- EP-A- 0 926 804
- WO-A-98/31565
- NL-A- 9 200 412
- US-A- 4 670 679
- PATENT ABSTRACTS OF JAPAN vol. 1999, no. 14, 22. Dezember 1999 (1999-12-22) & JP 11 255029 A (ICHIKOH IND LTD), 21. September 1999 (1999-09-21)

## Beschreibung

Die Erfindung betrifft eine Antriebsvorrichtung für einen verstellbaren Kraftfahrzeugspiegel unter Verwendung eines selbstkalibrierenden Potentiometers sowie ein selbstkalibrierendes Potentiometer.

Es sind Antriebsvorrichtungen für die Verstellung eines Rückblickspiegels bekannt, beispielsweise aus der gattungsgemässen WO 98/31565, mit denen die Rückblickspiegel eingestellt werden. Bei Automobilen der Oberklasse wird bei Fahrerwechsel nicht nur die Position des Fahrersitzes, sondern auch die damit verbundene Stellung des Rückblickspiegels auf einen fahrerspezifischen gespeicherten Wert eingestellt, wozu ein Positionssignal benötigt wird.

Potentiometer werden bei einfachen elektrischen Verstellantrieben benutzt, wenn für die Steuerung eines solchen Antriebs ein Positionssignal benötigt wird. Bei solchen Verstellantrieben kämmt das Antriebsrad z.B. ein Zahnrad, mit einer Gegenverzahnung der zu verstellenden Baugruppe, die zwei Endstellungen hat. Schleifwiderstand und Schleifbügel bzw. Schleifer des Potentiometers sind bei aus der Praxis bekannten Potentiometer einerseits mit dem Antriebsrad und andererseits mit dessen Fuß fest verbunden.

Um ein einigermaßen brauchbares Positionssignal zu bekommen, müssen solchen bekannten Antriebsräder von Hand in eine der beiden Endstellungen gebracht und so montiert werden, daß sich das Zahnrad dabei nicht verdreht. Bei engen Raumverhältnissen ist es beim Einbau fast bis ganz unmöglich, ein Zahnrad mit dem Gegenzahnrad ohne Verdrehung in Eingriff zu bringen. Selbst wenn das gelingt, bleiben dabei die Toleranzen der angetriebenen Baugruppen außer Betracht, so daß die Einstellung so ungenau ist, daß sie nicht als Eichung bezeichnet werden kann.

Es ist somit die Aufgabe der vorliegenden Erfindung eine Antriebsvorrichtung für einen verstellbaren Kraftfahrzeugspiegel unter Verwendung eines Potentiometers und ein Potentiometer selbst zu schaffen, die mit minimalem technischen Aufwand nach einem möglichst einfachen Verfahren eichbar bzw. kalibrierbar sind.

Diese Aufgabe wird erfindungsgemäß durch die Merkmale des Hauptanspruchs und des Nebenanspruchs gelöst.

Die erfindungsgemäße Antriebsvorrichtung für einen verstellbaren Kraftfahrzeugspiegel weist mindestens ein feststehendes Teil und einen relativ zum feststehenden Teils mittels mindestens eines Antriebsmotors und mindestens eine Antriebszahnrades schwenkbaren Spiegelträger und ein Potentiometer zur Erzeugung eines den Schwenkwinkel zwischen dem feststehenden Teil und dem Spiegelträger angebenden Signals auf. Dabei weist das Potentiometer mindestens einen Schleifwiderstand und mindestens einen Schleifer oder Schleifbügel auf, wobei eines dieser zwei Elemente fest mit einem mit dem feststehenden Teil verbundenen Basisteil verbunden ist und das andere der beiden Elemente über eine Rutschkupplung mit dem Antriebszahnrad oder einem mit dem Antriebszahnrad in Wirkverbindung stehenden Drehteil verbunden ist. Wesentlich ist, daß eines der beiden Elemente über die Rutschkupplung mit dem Antriebsrad bzw. Drehteil oder dem Basisteil verbunden ist und die an den beiden Elementen vorgesehenen Anschläge und Gegenanschläge bei der erstmaligen Einstellung das jeweilige Element mitnehmen, so daß dieses unter Überschreitung des Rutschmomentes der Rutschkupplung in die den Endstellungen des zu verstellenden Kraftfahrzeugspiegels entsprechenden Stellungen gebracht werden. Damit kann das Potentiometer in beliebiger Stelle eingebaut und die Eichung schnell und einfach bei erstmaliger Inbetriebnahme vorgenommen werden. Es handelt sich um eine rein mechanische und trotzdem sehr genaue Eichung, da sie den tatsächlichen Endstellungen des zu verstellenden Spiegels bzw. Spiegelträgers entspricht, unbeschadet von deren Maßabweichungen.

In einer bevorzugten Ausführungsform der Erfindung ist der Schleifer mittels Rutschkupplung mit dem Antriebszahnrad oder dem Drehteil und der Schleifwiderstand fest mit dem Basisteil verbunden und das Basisteil besitzt eine Nase, die mit Anschlägen des Schleifers zusammenwirkt. Diese Anordnung ist wegen der Art der elektrischen Anschlüsse und der besonders einfachen Herstellung und Montage der Teile besonders vorteilhaft.

In Weiterbildung der Erfindung ist der Schleifer ein in der Grundform kreisförmiges Stanzteil, das einen ebenen Abschnitt und mindestens einen bogenförmigen aus der Ebene des Sektors herausgebogenen Federbügel besteht, wobei der ebene Abschnitt über die Rutschkupplung mit dem Antriebszahnrad oder dem Drehteil verbunden ist und weiterhin zwei im Wesentlichen radial gerichtete Schnittkanten besitzt, die die Anschläge bilden. Ein derartiges Stanzteil kann in einem Pressehub gefertigt werden, ist somit billig und erfüllt mehrere Funktionen gleichzeitig, Schleifer, Feder und Rutschkupplung.

Dabei kann die Rutschkupplung aus einem zentralen, die Drehachse des Antriebszahnrades oder Drehteils bildenden Zapfen und einer Innenverzahnung gebildet, wobei die Innenverzahnung Bestandteil des den Schleifer bildenden Metallplättchens oder eines den Schleifer festlegenden Klemmrings ist, die auf dem Zapfen aufgepreßt sind. So entsteht die Rutschkupplung praktisch beim Zusammenbau von selbst. Die Gefahr des "Ausleierns" besteht nicht, da sie nur bei der anfänglichen Eichung rutscht und ansonsten nicht beansprucht wird.

Das erfindungsgemäße Potentiometer ist besonders einfach aufgebaut und somit kostengünstig und für die Massenproduktion verwendbar. Insbesondere ist es für Antriebe geeignet, die besonders klein gebaut werden müssen und bei denen die Raumverhältnisse beengt sind.

Die erfindungsgemäße Antriebsvorrichtung mit dem erfindungsgemäßen Potentiometer kann in einem besonders einfachen Verfahren kalibriert werden. Dazu das Basisteil mit dem Antriebszahnrad bzw. dem Drehteil mitsamt der anderen Antriebselemente, in der Regel einem oder mehrere Elektromotoren mit Untersetzungsgetriebe in beliebiger Stellung eingebaut und elektrisch angeschlossen, wodurch der Einbau auch automatisch ohne besondere Vorkehrungen durchgeführt werden kann, wodurch Zeit erspart wird. Nach der Montage kann die Eichung oder Kalibrierung ohne manuelle Vorstellung vornehmen zu müssen, entweder sofort oder erste bei erstmaliger Inbetriebnahme des Fahrzeugs durchgeführt werden. Dazu wird der Verstellantrieb bzw. Die Verstellantriebsvorrichtung erst in der einen Richtung eingeschaltet, bis der Spiegelträger seine meist durch den Einbau vorgegebene Endstellung erreicht. Wenn vorher Anschlag und Gegenanschlag des Potentiometers aufeinandertreffen (dann befindet sich das Potentiometer bereits in seiner Endstellung), wird eines der Elemente Schleifwiderstand oder Schleifer gegen die Kraft der Rutschkupplung mitgenommen, bis auch die Baugruppe, d.h. der Spiegelträger seine Endstellung erreicht hat. Wegen der beliebigen Montage passiert das entweder beim Anfahren der ersten Endstellung oder erst beim Anfahren der zweiten Endstellung.

Ausführungsbeispiele der Erfindung sind in der Zeichnung dargestellt und werden in der nachfolgenden Beschreibung näher erläutert. Es zeigen:
- Fig. 1: eine Ansicht auf einen Rückspiegel mit der schematischen Darstellung der erfindungsgemäßen Antriebsvorrichtung nach einem Ausführungsbeispiel der Erfindung,
- Fig. 2: einen Schnitt entsprechend II-II nach Fig. 1,
- Fig. 3: eine Ansicht entsprechend III in Fig. 2 auf den Schleifwiderstand des Potentiometers in vergrößerter Darstellung, wobei das Antriebsrad entfernt ist,
- Fig. 4: eine Ansicht entsprechend IV in Fig. 2 auf den Schleifer des erfindungsgemäß Potentiometers in vergrößerter Darstellung, wobei das Basisteil entfernt ist, und
- Fig. 5: eine Ansicht auf den feststehenden Teil einer Antriebsvorrichtung ähnlich Fig. 1 nach einem weiteren Ausführungsbeispiel der Erfindung.

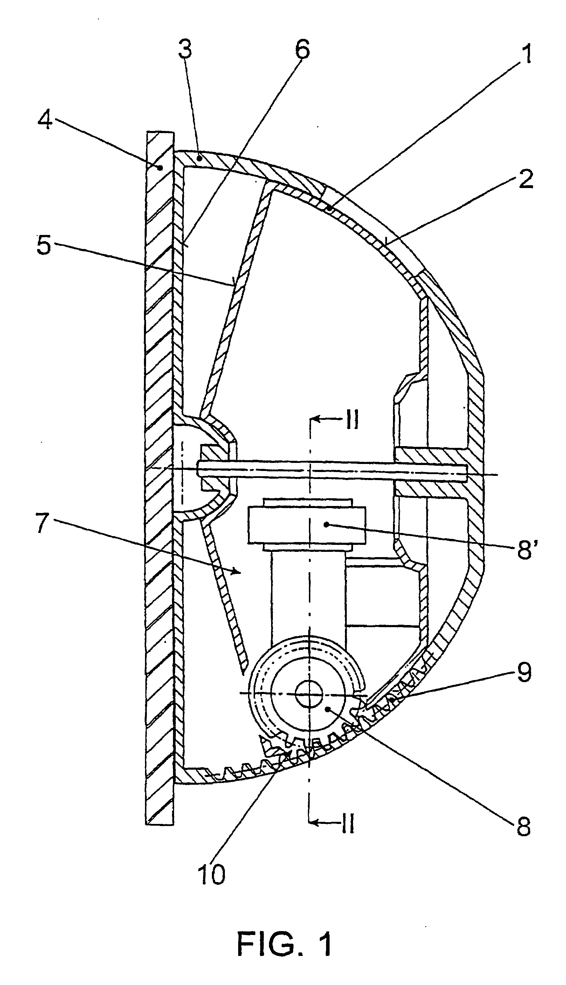

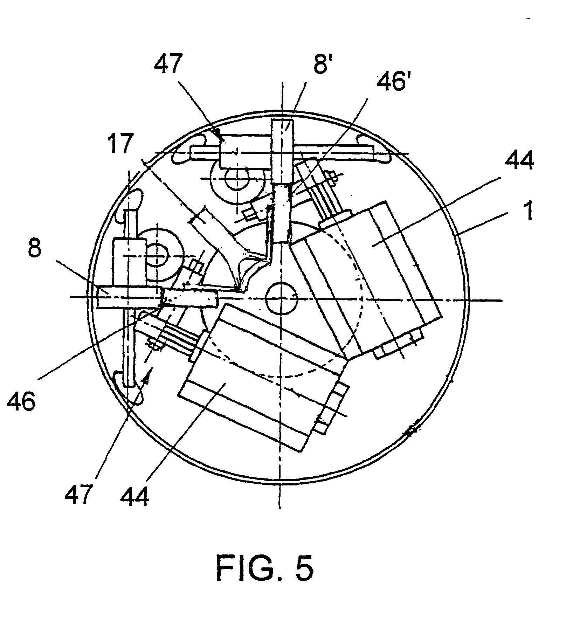

In Fig. 1 ist ein Teil eines Kraftfahrzeugrückspiegels im Schnitt dargestellt, wobei dieser Rückblickspiegel zumindest teilweise näher in der WO 98/31565 beschrieben ist, deren Offenbarung hiermit eingeschlossen sein soll. Dabei ist mit 1 ein fahrzeugfestes Antriebsgehäuse in Schalenform bezeichnet. Dieses Gehäuse bildet außen eine sphärische Führungsfläche 2 für einen Spiegelträger 3, der zur Verstellung des Rückblickspiegels um zwei gedachte Achsen schwenkbar ist und an dem ein Spiegelglas 4 befestigt ist. Das fahrzeugfeste Antriebsgehäuse weist eine schräge Abschlußfläche 5 auf, die auch eine Kegelfläche sein kann. Eine Antriebsvorrichtung 7 für die Verstellung des Spiegels, d.h. des Spiegelträgers 3 relativ zum Antriebsgehäuse 1 ist nur angedeutet, notwendige Elektromotoren und Getriebe sind nicht dargestellt. Dazu wird auf Fig. 5 verwiesen. Die Antriebsvorrichtung 7 ist im Antriebsgehäuse 1 befestigt und weist Antriebsräder 8, 8' auf, die von mindestens einem Elektromotor über ein Getriebe angetrieben werden. Ein Antriebsrad 8 ist für eine Verstellung um die Hochachse und das andere 8' für eine Verstellung um die Querachse vorgesehen. Die Antriebsräder 8, 8' sind Zahnräder, die jeweils von einem nicht dargestellten Zahnrad der Motor-Getriebeeinheit betätigt werden. Beide Antriebsräder 8, 8' sind gleich, so daß im Folgenden nicht zwischen ihnen unterschieden wird. Die Antriebsräder 8 stehen jeweils mit einer Innenverzahnung 9 im Eingriff, die auf der Innenfläche des kugelschalenförmigen Spiegelträgers ausgebildet ist, wozu das Antriebsgehäuse 1 einen Durchbruch 10 aufweist. Der Spiegelträger 3 kann jeweils relativ zum Antriebsgehäuse 1 solange über die Antriebsverzahnung 8, 9 bewegt werden, bis die Innenwand 6 des Spiegelträgers 3 an die Außenfläche 5 des Antriebsgehäuses 1 anstößt. Dadurch sind die Endstellungen hinsichtlich der Verstellung um die Hochachse und um die Querachse gegeben.

Um die Position des Spiegels entsprechend gewünschter Vorgaben einzustellen, ist eine Steuervorrichtung vorgesehen, die die Antriebsräder 8, 8' über die Motor-Getriebeeinheit abhängig von Positionssignalen ansteuert. Dazu sind Potentiometer als Positionssensoren vorgesehen, die elektrische Ist-Signale an die Steuereinrichtung liefern. Die entsprechenden Motoren der Antriebsvorrichtung werden solange angesteuert, bis eine gespeicherte Soll-Position erreicht wird.

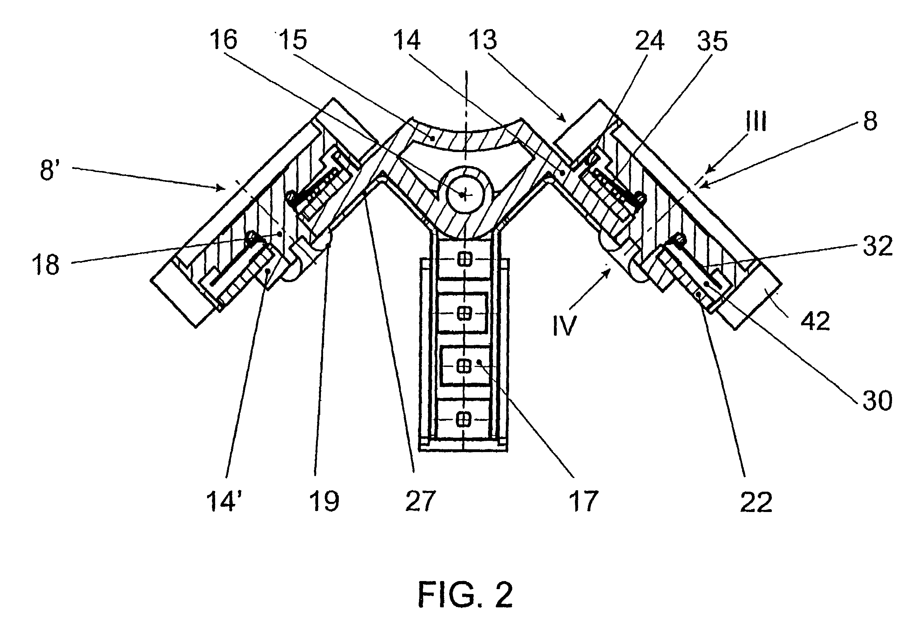

In Fig. 2 sind die zwei eine Verzahnung 42 aufweisende Antriebsräder 8, 8', die wegen der Verstellung des Spiegels um zwei Achsen im rechten Winkel zueinander angeordnet sind. Jedes Antriebsrad 8, 8' ist über einen Zapfen 18 mit einem gehäusefesten Basis- oder Fußteil 14, 14' verbunden und auf diesem gelagert. Die Basisteile 14, 14' sind ein gemeinsames Bauteil 15, für dessen Befestigung im Antriebsgehäuse eine Bohrung 16 für eine nicht dargestellte Schraube vorgesehen ist. Das gemeinsame Bauteil 15 ist mit einem Ansatz 17 für elektrische Anschlüsse bzw. Kontaktstellen versehen, die über elektrische Leitungen mit der Steuerung verbindbar sind. Der Zapfen 18 des jeweiligen Antriebsrades 8, 8' ist in der jeweiligen Bohrung des Fußteiles 14, 14' drehbar gelagert und mittels einer Bördelung 19 axial fixiert. Selbstverständlich sind auch andere Festlegungsmöglichkeiten der Antriebsräder an dem jeweiligen Basisteil 14, 14' denkbar.

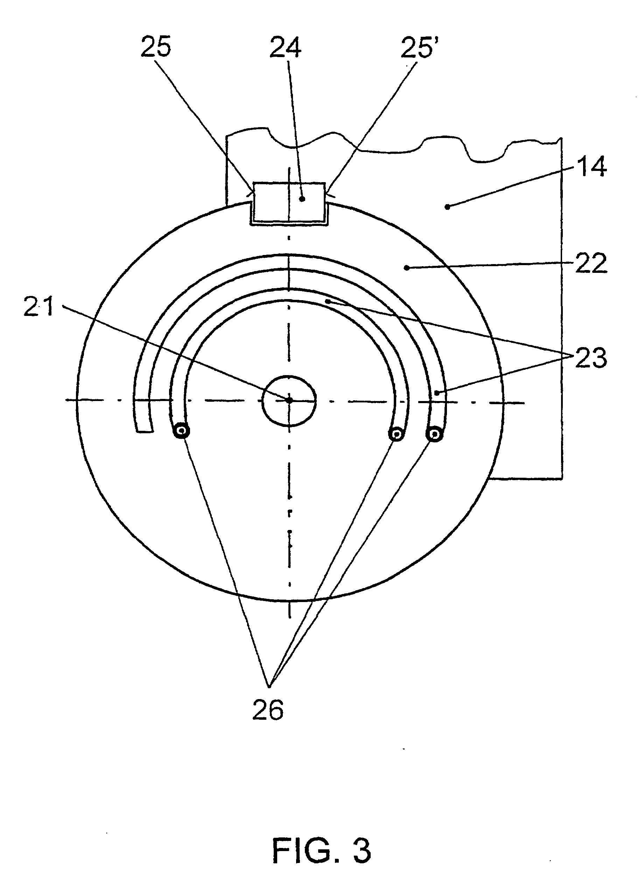

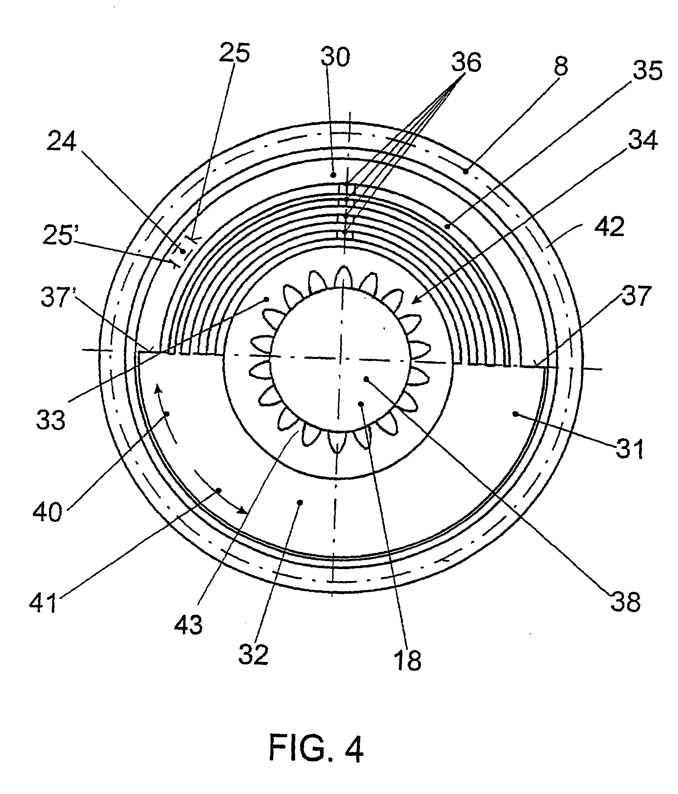

Zwischen Antriebsrad 8, 8' und Basisteil 14, 14' ist jeweils ein den Positionssensor bildender Potentiometer 13 vorgesehen, wobei das Antriebsrad 8, 8' die Funktion des Drehteils des Potentiometers 13 übernimmt. Das Antriebsrad 8, 8' weist auf der dem Basisteil 14, 14' zugewandten Seite eine Vertiefung 30 auf, in der ein Schleifbügel bzw. Schleifer 31 und ein Schleifwiderstand 22, bestehend aus einer kreisförmigen Platte aus einem isolierenden Werkstoff und Schleifbahnen aufgenommen sind. Der Schleifwiderstand 22 und das Schleifer 31 sind näher in den Fig. 3 und 4 dargestellt.

Fig. 3 zeigt eine Teilansicht des Basisteils 14 bei abgenommenem Antriebsrad 8. Auf dem Basisteil ist der Schleifwiderstand 21 befestigt, z.B. angeklebt. Auf der kreisförmigen Platte aus dem isolierenden Werkstoff mit einer Zentralbohrung sind zwei bogenförmige Schleifbahnen ausgebildet, die Widerstände bilden. Zur winkelrichtigen Positionierung des Schieifwiderstandes 22 auf dem Basisteil 14 ist eine Anschlagnase 24 an dem Basisteil 14 angeformt, wie auch in Fig. 2 zu erkennen ist. Die Schleifbahnen 23 sind über als Kontaktierung ausgeführte Anschlußösen und Anschlußleitungen 27, die wiederum in Fig. 2 zu erkennen sind, elektrisch mit den elektrischen Anschlüssen am Ansatz 17 verbunden. Wie zu erkennen ist, weist die innere Schleifbahn jeweils an ihren Enden Anschlußösen auf, während die äußere Schleifbahn 23 nur an einem Ende mit einer Anschlußöse versehen ist. Somit führen drei Anschlußleitungen 27 zu jeweils drei elektrischen Anschlüssen am Ansatz 17.

In Fig. 4 ist das Antriebsrad 8 vom Basisteil 14 aus gesehen dargestellt. Auf dem Außenumfang ist die Verzahnung 42 vorgesehen, während der mittlere Bereich, wie schon oben beschrieben, vertieft ist. In die Vertiefung ist ein Schleifbügel bzw. Schleifelement 31 eingesetzt. Es besteht aus einem metallischen plattenförmigen Stanzteil, das in der Grundform kreisförmig ist. Der Schleifer 31 weist ein ebenes achsnormales Segment bzw. einen Abschnitt 32 und bogenförmige Federbügel 35, im Ausführungsbeispiel vier, auf die mit Abstand zueinander konzentrisch ausgebildet sind und in den durchgehenden Abschnitt 32 übergehen. Die Federbügel 35 sind mittig mit Kontaktnoppen 36 versehen, von denen jeweils zwei auf einer der Schleifbahnen 23 des Schleifwiderstandes 22 schleifen. Dazu sind die Federbügel 35 aus der Ebene des Segmentes bzw. des Abschnitts 32 herausgebogen und haben somit eine federnde Wirkung. Aufgrund der Verdrehung des Schleifers 31 zu den Schleifbahnen 13 ändert sich der Widerstandswert, der an den elektrischen Anschlüssen abgreifbar ist und der ein Maß für die Position der Kontaktnoppen auf den Schleifbahnen und somit ein Maß für die Position des Spiegelträgers zum Antriebsgehäuse ist. Wie aus Fig. 4 zu erkennen ist, sind am äußeren Umfang des Segmentes bzw. des Abschnitts 32 am Übergangsbereich zwischen Segment und Federbügel Anschläge 37, 37' durch Änderung des äußeren Radius des Abschnittes 32 ausgebildet, deren Winkelabstand (hier 180°) dem Verstellbereich des Antriebsrades 8 und somit des Spiegels entspricht.

Der Schleifer 31 bzw. das Stanzteil weist ein kreisförmiges Loch 38 für den Durchgriff des Zapfens 18 auf. Weiterhin ist eine Klemmscheibe 33 mittig angeordnet, die gleichfalls ein Loch 38 aufweist und die den Schleifer 31 festlegt. Die Klemmscheibe 33 ist an ihrem Innenumfang mit einer Innenverzahnung 43 versehen, deren Zähne sich bei dem Einbau des Schleifers 31 in die Vertiefung 30 in den Umfang des Zapfens 18 einpressen. Die Klemmscheibe 33 bildet zusammen mit dem Zapfen 18 des Antriebsrades 8 eine Rutschkupplung 34, d.h. durch die Innenverzahnung wird eine Verbindung zwischen Zapfen 18 und festgeklemmtem Schleifer 31 geschaffen, die ein Durchrutschen erlaubt, wenn einer der beiden Anschläge 37, 37' auf einen der beiden durch die Anschlagnase 24 gebildeten Gegenanschläge 25, 25' des Basisteils 14 trifft. Die Klemmscheibe 33 wurde oben als getrenntes Teil mit Innenverzahnung 43 beschrieben, selbstverständlich kann der Schleifer selbst mittig mit einer Innenverzahnung versehen sein, die zusammen mit dem Zapfen 18 die Rutschkupplung 34 bildet.

Die Funktion des Potentiometers ergibt sich aus dem Ablauf des Verfahrens zu dessen Kalibrierung. Zuerst wird das Potentiometer montiert, wobei der Schleifer 31 in beliebiger Winkelstellung in das Antriebsrad 8 eingesetzt wird. Dabei wird der Zapfen 18 durch die Bohrung 38 mit der Verzahnung 43 geschoben und die Zähnchen in den Zapfen 18 eingepreßt. Dann wird das gesamte Antriebsrad 8 mit seinem Zapfen 18 auf das Basisteil 14 gesteckt und durch Anbringen der Bördelung 19 auf dem Zapfen axial festgelegt. Die gesamte Antriebsvorrichtung 7 mit der nicht dargestellten Motor-Getriebeeinheit wird daraufhin in das Antriebsgehäuse 1 des Spiegels eingebaut, alle elektrischen Anschlüsse vorgenommen und der Spiegel komplett montiert und gegebenenfalls am Fahrzeug angebracht.

Daraufhin oder irgendwann später bei der ersten Inbetriebnahme des Fahrzeugs wird der Spiegel durch normale Betätigung vom Fahrersitz, durch die die Motor-Getriebeeinheit mit Spannung versorgt wird, der Reihe nach in seine beiden Endstellung gebracht. Diese sind jeweils erreicht, wenn die Außenfläche 5 des Antriebsgehäuses 1 an der Innenwand 6 des Spiegelträgers 3 ansteht. Auf diese Weise erfolgt die Eichung ganz von selbst beim erstmaligen Gebrauch rein mechanisch wie folgt:

Beim Anfahren der Extremstellung des Spiegels, der einer bestimmten Stellung des Antriebsrades 8 entspricht, wird dieses bezüglich der am Basisteil 14 feststehenden Anschlagnase verdreht. Weil die Montage in beliebiger Stellung erfolgt ist, befindet sich auch die Anschlagnase 24 (gestrichelt in Fig. 4) in beliebiger Stellung. Wird das Antriebsrad 8 zuerst im Uhrzeigersinn entsprechend Pfeil 40 gedreht, bewegt sich der Anschlag 37' auf den Gegenanschlag 25' zu. Erreicht er diesen, bevor das Antriebsrad 8 seine Endstellung erreicht hat, wird die Anschlagnase 24 den Schleifbügel 31 unter Überwindung des Momentes der Rutschkupplung 34 solange verdrehen, bis das Antriebsrad 8 seine Endstellung entsprechend der Endstellung des Spiegels erreicht. Damit ist das Potentiometer geeicht. Wird das Antriebsrad 8 jedoch gegen den Uhrzeigersinn entsprechend Richtungspfeil 41 gedreht, so wird er seine Endstellung erreichen, bevor der Anschlag 37 mit dem Gegenanschlag 25 der Anschlagnase 24 in Berührung gekommen ist. Es kommt zu keiner Eichung des Potentiometers. Da die Stellung des Antriebsrades zur Anschlagnase 24 unbestimmt ist, ist es notwendig, beide Extremstellungen anzufahren. In einer der beiden findet die Eichung statt. Da der Verstellbereich des Antriebsrades 8 festgelegt ist, bedarf es zur Eichung nur des Anfahrens einer einzigen Endstellung.

Das Potentiometer kann im Rahmen der Erfindung von dem beschriebenen Ausführungsbeispiel abweichend ausgeführt werden, insbesondere durch Bewegungs- bzw. Funktionsumkehrung. Es kann neben der Antriebsvorrichtung für einen Kraftfahrzeugspiegel überall da eingesetzt werden, wo eine von außen begrenzte Drehbewegung auszuführen ist und verschiedenen Drehstellungen gesteuert angefahren werden müssen.

In Fig. 5 ist ein weiteres Ausführungsbeispiel dargestellt, das wiederum einen Antrieb 7 für einen Rückspiegel zeigt, wobei hier eine Aufsicht entsprechend der Fig. 1 von links auf das Antriebsgehäuse 1 ohne Abschlußflächen 5 dargestellt ist. Es sind zwei Elektromotoren 44 zu erkennen, die über eine Getriebeanordnung 47 die Antriebsräder 8, 8' antreiben. In diesem Ausführungsbeispiel sind die Antriebsräder 8, 8' nicht Bestandteil des oben beschriebenen Potentiometers, sondern es sind getrennte Zahnräder 46, 46' vorgesehen, die mit den Antriebsrädern 8, 8' in Eingriff stehen und von diesen gedreht werden. Das bedeutet, daß in Fig. 2 die Antriebsräder 8, 8' durch die das Drehteil für die Potentiometer bildenden Zahnräder 46, 46' zu ersetzen sind, ansonsten ist der Aufbau identisch zu dem, der in Zusammenhang mit den Fign. 2 bis 4 beschrieben wurde.

## Patentansprüche

1. Antriebsvorrichtung für einen verstellbaren Kraftfahrzeugspiegel mit einem feststehenden Teil (1 und einem relativ zum feststehenden Teil (1) mittels mindestens eines Antriebsmotors und mindestens eines Antriebszahnrades (8) schwenkbaren Spiegelträger (3) **gekennzeichnet durch** ein Potentiometer (13) zur Erzeugung eines den Schwenkwinkel zwischen dem feststehenden Teil (1) und dem Spiegelträger (3) angebenden elektrischen Signals, wobei das Potentiometer (13) einen Schleifwiderstand (22) und einen Schleifer (31) aufweist und eines der Elemente Schleifwiderstand (22) und Schleifer (31) fest mit einem mit dem feststehenden Teil (1) verbundenen Basisteil (14, 15) und das andere der beiden Elemente (22, 31) über eine Rutschkupplung (34) mit dem Antriebszahnrad (8) oder einem mit dem Antriebszahnrad in Wirkverbindung stehenden Drehteil (46) verbunden ist, wobei das Rutschmoment der Rutschkupplung (34) größer als das Reibungsmoment zwischen den zwei Elemente (22, 31) ist und das Antriebszahnrad (8) oder das Drehteil (46) drehbar an dem Basisteil (14, 15) gelagert ist und wobei eines der Elemente (22, 31) zwei Anschläge (37, 37') aufweist, deren Winkelabstand dem maximalen Schwenkwinkel zwischen dem feststehenden Teil (1) und dem Spiegelträger (3) entspricht und das andere der Elemente (22, 31) zwei mit den Anschlägen (37, 37') zusammenwirkende Gegenanschläge (25, 25') aufweist.

2. Antriebsvorrichtung nach Anspruch 1, **dadurch gekennzeichnet, daß** der Schleifer (31) mittels Rutschkupplung (34) mit dem Antriebszahnrad (8) oder dem Drehteil (46) und der Schleifwiderstand (22) fest mit dem Basisteil (14) verbunden ist und das Basisteil (14) eine Anschlagnase (24) aufweist, die mit Anschlägen (37, 37') des Schleifers (31) zusammenwirkt.

3. Antriebsvorrichtung nach Anspruch 1 oder Anspruch 2, **dadurch gekennzeichnet, daß** das Drehteil (46) ein mit dem Antriebszahnrad (8) im Eingriff stehendes Zahnrad ist.

4. Antriebsvorrichtung nach einem der Ansprüche 1 bis 3, **dadurch gekennzeichnet, daß** der Schleifer (31) ein in der Grundform rundes Metallplättchen ist, aus dem mindestens ein bogenförmiger und zur Erzielung einer Federwirkung abgebogener Bügel (35) ausgearbeitet ist, wobei das Metallplättchen über die Rutschkupplung mit dem Antriebszahnrad oder dem Drehteil verbunden ist.

5. Antriebsvorrichtung nach Anspruch 4, **dadurch gekennzeichnet, daß** am äußeren Umfang des Schleifers (31) durch sprunghafte Verringerung des Radius des Metallplättchens im Wesentlichen radial gerichtete Anschläge (37, 37') ausgebildet sind.

6. Antriebsvorrichtung nach einem der Ansprüche 1 bis 5, **dadurch gekennzeichnet, daß** die Rutschkupplung durch einen zentralen, die Drehachse des Antriebszahnrades (8) oder Drehteils (46) bildenden Zapfen (18) und einer Innenverzahnung (43) gebildet wird, wobei die Innenverzahnung (43) Bestand des den Schleifer (31) bildenden Metallplättchens oder eines den Schleifer (31) festlegenden Klemmrings (33) ist und auf den Zapfen (18) aufgepreßt ist.

7. Antriebsvorrichtung nach einem der Ansprüche 1 bis 6, **dadurch gekennzeichnet, daß** zwei Antriebsräder (8, 8') oder Drehteile (46, 46') vorgesehen sind, die in zueinander senkrecht stehenden Ebenen angeordnet sind und ihre Basisteile (14, 14') zu einem Bauteil (15) zusammengefaßt sind.

8. Antriebsvorrichtung nach einem der Ansprüche 1 bis 7, **dadurch gekennzeichnet, daß** der feststehende Teil (1) schalenförmig ausgebildet ist und der schwenkbare Spiegelträger (3) den schalenförmigen feststehenden Teil zumindest teilweise umgibt, wobei in der Innenfläche des Spiegelträgers (3) mindestens eine Verzahnung (9) ausgebildet ist, die mit dem den schalenförmigen feststehenden Teil (1) über einen Durchbruch durchgreifenden Antriebszahnrad (8) zusammenarbeitet.

9. Antriebsvorrichtung nach Anspruch 8, **dadurch gekennzeichnet, daß** der mindestens eine Antriebsmotor (44), das mindestens eine Antriebszahnrad (8), gegebenenfalls das Drehteil (46) und gegebenenfalls ein zwischen Antriebsmotor (44) und Antriebszahnrad (8) geschaltetes Getriebe (47) sowie das mindestens eine Basisteil (14, 15) in dem schalenförmigen feststehenden Teil (1) aufgenommen sind.

10. Potentiometer zur Erzeugung eines elektrischen Signals, das einen Verstellwinkel einer zwischen zwei Endstellungen verstellbaren Baugruppe bestimmt, mit einem einen Schleifwiderstand aufweisenden Basisteil und einem auf diesen über einen Drehzapfen gelagerten, einen Schleifer aufweisenden Drehteil, der mit der verstellbaren Baugruppe in Wirkverbindung steht, **dadurch gekennzeichnet, daß** der Schleifer (31) aus einem in der Grundform kreisförmigen Metallplättchen (32, 35) besteht, auf dessen Umfang durch Änderung des Radius im Wesentlichen radial gerichtete Anschläge (37, 37') ausgebildet sind, die die zwei Endstellungen der verstellbaren Baugruppe vorgeben, und daß der Schleifer direkt oder unter Verwendung eines Klemmringes (33) auf den Zapfen (18) aufgepreßt ist, derart, daß Zapfen und Schleifer (31) oder Klemmring (33) eine Rutschkupplung bilden, deren Rutschmoment größer als das Reibungsmoment zwischen Schleifer (31) und Schleifwiderstand (22) ist.

11. Potentiometer nach Anspruch 10, **dadurch gekennzeichnet, daß** der Schleifer (31) mindestens ein Schleifelement umfaßt, das auf mindestens einer Widerstandsbahn des Schleifwiderstandes (22) gleitet und als mindestens ein bogenförmiger Federbügel (35) ausgebildet ist, der aus dem Metallplättchen ausgearbeitet ist und federnd aus der Ebene des Metallplättchens abgebogen ist.

12. Potentiometer nach Anspruch 10 oder Anspruch 11, **dadurch gekennzeichnet, daß** das Metallplättchen oder Klemmring (33) mit einer Innenverzahnung (43) versehen sind, die zur Bildung der Rutschkupplung beim Aufpressen mit dem Zapfen (18) in Eingriff tritt.

13. Potentiometer nach einem der Ansprüche 10 bis 12, **dadurch gekennzeichnet, daß** das Drehteil ein Zahnrad ist, das als Antriebszahnrad (8) der verstellbaren Baugruppe ausgebildet ist oder mit einem Antriebszahnrad der verstellbaren Baugruppe in Eingriff steht.

14. Potentiometer nach einem der Ansprüche 10 bis 12, **dadurch gekennzeichnet, daß** das Basisteil (14) eine Anschlagnase (24) aufweist, die mit den Anschlägen (37, 37') des Schleifers (31) zusammenwirkt.

15. Potentiometer nach einem der Ansprüche 10 bis 14, **dadurch gekennzeichnet, daß** das Drehteil (8, 46) eine Vertiefung (30) aufweist, in die der Schleifer (31) eingesetzt ist und daß der Schleifwiderstand (22) auf einem runden plattenförmigen Träger aus isolierendem Material aufgebracht ist, der mit dem Basisteil (14) fest verbunden ist.

16. Potentiometer nach einem der Ansprüche 10 bis 15, **dadurch gekennzeichnet, daß** die elektrischen Verbindungen zu dem Schleifwiderstand (22) und Anschlußkontakte auf dem Basisteil (14, 15) angeordnet sind.

17. Potentiometer nach einem der Ansprüche 10 bis 16, **dadurch gekennzeichnet, daß** mehrere bogenförmige Federbügel (35) konzentrisch mit Abstand zueinander vorgesehen sind.

## Claims

1. Drive device for an adjustable vehicle mirror, having a fixed portion (1) and a mirror support (3) pivotable relative to the fixed portion (1) by means of at least one driving motor and at least one driving toothed wheel (8), **characterized by** a potentiometer (13) to generate an electrical signal indicating the pivoting angle between the fixed portion (1) and the mirror support (3), the potentiometer (13) having a slide resistor (22) and a slider (31) and one of the elements slide resistor (22) and slider (31) being securely connected to a base portion (14, 15) connected to the fixed portion (1) and the other of the two elements (22, 31) being connected via a slip clutch (34) to the driving toothed wheel (8) or to a swivel part (46) cooperating with the driving toothed wheel, the slipping moment of the slip clutch (34) being greater than the moment of friction between the two elements (21, 23) and the driving toothed wheel (8) or the swivel part (46) being mounted rotatably on the base portion (14, 15), and one of the elements (22, 31) having two stops (37, 371), whose angular spacing corresponds to the maximum pivoting angle between the fixed portion (1) and the mirror support (3), and the other of the elements (22, 31) having two counter-stops (25, 251) co-operating with stops (37, 371).

2. Drive device according to claim 1, **characterised in that** the slider (31) is connected by means of the slip clutch (34) to the driving toothed wheel (8) or the swivel part (46), and the slide resistor (22) is securely connected to the base portion (14), and the base portion (14) has a stop boss (24) which co-operates with stops (37, 37') of the slider (31).

3. Drive device according to claim 1 or claim 2, **characterised in that** the swivel part (46) is a toothed wheel enqaqing with the driving toothed wheel (8).

4. Drive device according to one of claims 1 to 3, **characterised in that** the slider (31) is a small metal plate which is round in basic shape, from which at least one arcuate band (35) is bent out in order to achieve a spring action, the small metal plate being connected via the slip clutch to the driving toothed wheel or the swivel part.

5. Drive device according to claim 4, **characterised in that** on the outer perimeter of the slider (31), by discontinuous reduction of the radius of the small metal plate, are formed stops (37, 37') oriented substantially radially.

6. Drive device according to one of claims 1 to 5, **characterised in that** the slip clutch is formed by a central journal (18) forming the rotational axis of the driving toothed wheel (8) or swivel part (46), and an internal toothing (43), the internal toothing (43) being a constituent part of the small metal plate forming the slider (31) or of a clamping ring (33) fixing the slider (31), and being pressed onto the journal 18).

7. Drive device according to one of claims 1 to 6, **characterised in that** two driving wheels (8, 81) or swivel parts (46, 46' ) are provided which are arranged in planes lying perpendicular to one another and their base portions (14, 14') are combined into one component (15).

8. Drive device according to one of claims 1 to 7, **characterised in that** the fixed portion (1) is configured shell-shaped and the pivotable mirror support (3) surrounds the shell-shaped fixed portion at least partially, at least one toothing (9) being formed in the inner surface of the mirror support (3), which toothing co-operates with the shell-shaped fixed portion (1) via a driving toothed wheel (8) penetrating an opening.

9. Drive device according to claim 8, **characterised in that** the at least one driving motor (44), the at least one driving toothed wheel (8), possibly the swivel part (46) and possibly a gear (4~) inserted between drive motor (44) and driving toothed wheel (8), as well as the at least one base portion (14, 15) are accomodated in the shell-shaped fixed portion (1).

10. Potentiometer for generating an electrical signal which determines an adjusting angle of a sub-assembly which is adjustable between two end positions, with a base portion having a slide resistor and a swivel part mounted on the latter via a pivot pin and having a slider, which swivel part co-operates with the adjustable sub-assembly, **characterised in that** the slider (31) consists of a small metal plate (32, 35) which is circular in basic shape, and on the perimeter of which are formed, by altering the radius, stops (37, 37') aligned substantially radially, which predetermine the two end positions of the adjustable subassembly, and **in that** the slider is pressed onto the journal (18) either directly or using a clamping ring (33), in such a way that journal and slider (31) or clamping ring (33) form a slip clutch, the slipping moment of which is greater than the moment of friction between slider (31) and slide resistor (22).

11. Potentiometer according to claim 10, **characterised in that** the slider (31) includes at least one sliding element which slides on at least one resistance path of the slide resistor (22) and is formed as at least one arcuate spring band (35), which is worked out of the small metal plate and is bent resiliently out of the plane of the small metal plate.

12. Potentiometer according to claim 10 or claim 11, **characterised in that** the small metal plate or clamping ring (33) is provided with an internal toothing (43) which comes into engagement with the journal (18) when pressed on, to form the slip clutch.

13. Potentiometer according to one of claims 10 to 12, **characterised in that** the swivel part is a toothed wheel which is configured as the driving toothed wheel (8) of the adjustable sub-assembly or is in engagement with a driving toothed wheel of the adjustable sub-assembly.

14. Potentiometer according to one of claims 10 to 12, **characterised in that** the base portion (14) has a stop boss (24) which co-operates with the stops (37, 37') of the slider (31).

15. Potentiometer according to one of claims 10 to 12, **characterised in that** the swivel part (8, 46) has a depression (30) into which the slider (31) is inserted and **in that** the slide resistor (22) is attached to a round plate-shaped support formed from insulating material, which is securely connected to the base portion (14).

16. Potentiometer according to one of claims 10 to 15, **characterised in that** the electrical connections to the slide resistor (22) and the connection contacts are arranged on the base portion (14, 15).

17. Potentiometer according to one of claims 10 to 16, **characterised in that** a plurality of arcuate spring bands (35) are provided concentrically at a spacing from one another.

## Revendications

1. Dispositif de commande pour un rétroviseur réglable d'un véhicule automobile, comprenant une pièce fixe (1) et un support de rétroviseur (3), pouvant pivoter par rapport à la pièce fixe (1) au moyen d'au moins un moteur de commande et d'au moins une roue dentée de commande (8), **caractérisé par** un potentiomètre (13) destiné à fournir un signal indiquant l'angle de pivotement entre la pièce fixe (1) et le support de rétroviseur (3), le potentiomètre (13) étant muni d'une résistance de frottement (22) et d'un élément de frottement (31), l'un des deux éléments, résistance de frottement (22) et élément de frottement (31), étant assemblé fermement avec une pièce de base (14, 15) assemblée avec la pièce fixe (1), alors que l'autre des deux éléments (22, 31) est assemblé par l'intermédiaire d'un accouplement à friction (34) avec la roue dentée de commande (8) ou une pièce rotative (46) en liaison active avec la roue dentée de commande (8), le couple de friction de l'accouplement à friction (34) étant supérieur au couple de frottement entre les deux éléments (22, 31), et la roue dentée de commande (8) ou la pièce rotative (46) étant logée de manière rotative contre la pièce de base (14, 15), et un des deux éléments (22, 31) étant muni de deux butées (37, 37'), dont la distance angulaire correspond à l'angle de pivotement maximum entre la pièce fixe (1) et le support de rétroviseur (3), et l'autre élément (22, 31) étant muni de deux contre-butées (25, 25') coopérant avec les butées (37, 37').

2. Dispositif de commande selon la revendication 1, **caractérisé en ce que** l'élément de frottement (31) est assemblé fermement avec la roue dentée de commande (8) ou la pièce rotative (46) au moyen de l'accouplement de friction (34), et la résistance de frottement (22) est assemblée fermement avec la pièce de base (14), et la pièce de base (14) comporte un taquet de butée (24) qui coopère avec des butées (37, 37') de l'élément de frottement (31).

3. Dispositif de commande selon la revendication 1 ou 2, **caractérisé en ce que** la partie rotative (46) est une roue dentée engrenant avec la roue dentée de commande (8).

4. Dispositif de commande selon une des revendications 1 à 3, **caractérisé en ce que** l'élément de frottement (31) est une plaquette métallique avec une forme de base circulaire, dans laquelle a été usinée au moins une bride (35) courbe et pliée pour obtenir un effet de ressort, la plaquette métallique étant assemblée par l'intermédiaire de l'accouplement à friction avec la roue dentée de commande ou la pièce rotative.

5. Dispositif de commande selon la revendication 4, **caractérisé en ce que** des butées (37, 37') orientées sensiblement dans le sens radial sont formées contre la périphérie extérieure de l'élément de frottement (31) par une diminution graduée du rayon de la plaquette métallique.

6. Dispositif de commande selon une des revendications 1 à 5, **caractérisé en ce que** l'accouplement à friction est formé par un tenon (18) central formant l'axe de rotation de la roue dentée de commande (8) ou de la partie rotative (46) et par une denture intérieure (43), la denture intérieure (43) étant une partie intégrante de la plaquette métallique formant l'élément de frottement (31) ou d'une bague de serrage (33) bloquant l'élément de frottement (31) et étant pressée contre le tenon (18).

7. Dispositif de commande selon une des revendications 1 à 6, **caractérisé en ce que** deux roues de commande (8, 8') ou parties rotatives (46, 46') sont prévues, lesquelles sont disposées dans des plans perpendiculaires et leurs pièces de base (14, 14') sont regroupées pour former une seule pièce de base (15).

8. Dispositif de commande selon une des revendications 1 à 7, **caractérisé en ce que** la pièce fixe. (1) est conçue en forme de coque et le support de rétroviseur (3) pivotant entoure au moins en partie la pièce fixe en forme de coque, la face intérieure du support de rétroviseur (3) étant munie d'au moins une denture (9), qui coopère avec la roue dentée de commande (8) passant à travers un passage réalisé dans la pièce fixe (1) en forme de coque.

9. Dispositif de commande selon la revendication 8, **caractérisé en ce que** le au moins un moteur de commande (44), la au moins une roue dentée de commande (8), le cas échéant la pièce rotative (46) et, le cas échéant, un engrenage (47) monté entre le moteur de commande (44) et la roue dentée de commande (8), ainsi que la au moins une pièce de base (14, 15) sont logés dans la pièce fixe (1) en forme de coque.

10. Potentiomètre destiné à générer un signal électrique, qui définit un angle de réglage d'un bloc réglable entre deux positions finales, comprenant une pièce de base munie d'une résistance de frottement et d'une pièce rotative logée sur celle-ci au moyen d'un tenon de rotation et munie d'un élément de frottement, qui est en liaison active avec le bloc réglable, **caractérisé en ce que** l'élément de frottement (31) est une plaquette métallique (32, 35) avec une forme de base circulaire, dans la périphérie de laquelle une variation du rayon a permis de réaliser des butées (37, 37') orientées sensiblement dans le sens radial, qui définissent les deux positions finales du bloc réglable, et **en ce que** l'élément de frottement est pressé directement contre le tenon (8) ou par l'intermédiaire d'une bague de serrage (33), de telle sorte que le tenon et l'élément de frottement (31) ou la bague de serrage (33) forment un accouplement à friction dont le couple de friction est supérieur au couple de frottement entre l'élément de frottement (31) et la résistance de frottement (22).

11. Potentiomètre selon la revendication 10, **caractérisé en ce que** l'élément de frottement (31) comporte au moins un élément de frottement, qui glisse sur au moins une piste de frottement de la résistance de frottement (22) et est conçue sous forme d'au moins une bride de ressort (35) courbe, qui est usinée dans la plaquette métallique et est pliée de manière flexible en dehors du plan de la plaquette métallique.

12. Potentiomètre selon la revendication 10 ou 11, **caractérisé en ce que** la plaquette métallique ou la bague de serrage (33) sont munies d'une denture intérieure (43) qui, pour former l'accouplement à friction, entre en prise avec le tenon (18) sous l'effet de la pression.

13. Potentiomètre selon une des revendications 10 à 12, **caractérisé en ce que** la pièce rotative est une roue dentée, qui est conçue sous forme de roue dentée de commande (8) du bloc réglable ou engrène avec une roue dentée de commande du bloc réglable.

14. Potentiomètre selon une des revendications 10 à 12, **caractérisé en ce que** la pièce de base (14) comporte un taquet de butée (24), qui coopère avec les butées (37, 37') de l'élément de frottement (31).

15. Potentiomètre selon une des revendications 10 à 14, **caractérisé en ce que** la pièce rotative (8, 46) comporte un creux (30) dans lequel est inséré l'élément de frottement (31) et **en ce que** la résistance de frottement (22) est posée sur un support en forme de plaquette ronde, réalisé en matériau isolant, qui est assemblé fermement avec la pièce de base (14).

16. Potentiomètre selon une des revendications 10 à 15, **caractérisé en ce que** les raccordements électriques avec la résistance de frottement (22) et les contacts de connexion sont disposés sur la pièce de base (14, 15).

17. Potentiomètre selon une des revendications 10 à 16, **caractérisé en ce que** plusieurs brides de ressort (35) courbes sont prévues concentriquement à une distance donnée les unes des autres.
